(19) Europäisches Patentamt
European Patent Office
Office européen des brevets

(11) **EP 3 997 779 B1**

(12) # EUROPEAN PATENT SPECIFICATION

(45) Date of publication and mention
of the grant of the patent:
**03.09.2025 Bulletin 2025/36**

(51) International Patent Classification (IPC):
**H02K 5/20** (2006.01)        **H02K 1/18** (2006.01)

(21) Application number: **20740431.0**

(52) Cooperative Patent Classification (CPC):
**H02K 5/203; H02K 1/185; H02K 2213/03**

(22) Date of filing: **10.07.2020**

(86) International application number:
**PCT/NL2020/050455**

(87) International publication number:
**WO 2021/006738 (14.01.2021 Gazette 2021/02)**

(54) **PERMANENT MAGNET SYNCHRONOUS TORQUE MOTOR**

PERMANENTMAGNET-SYNCHRONDREHMOMENTMOTOR

MOTEUR SYNCHRONE À COUPLE À AIMANT PERMANENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2019 NL 2023483**

(43) Date of publication of application:
**18.05.2022 Bulletin 2022/20**

(73) Proprietor: **Tecnotion Assets B.V.**
**7609 RR Almelo (NL)**

(72) Inventors:
- **GABRIËLSE, Adriaan Johannes**
  **7471 VK Goor (NL)**
- **VAN VUURE, Thorwald León**
  **7642 JE Wierden (NL)**

(74) Representative: **Arnold & Siedsma**
**Bezuidenhoutseweg 57**
**2594 AC The Hague (NL)**

(56) References cited:
**EP-A1- 2 639 933        EP-A1- 3 065 265**
**WO-A1-2013/118703        US-A1- 2013 328 423**
**US-B2- 7 116 029**

- **HANIC ANA ET AL: "A Novel Method for No-Load Magnetic Field Analysis of Saturated Surface Permanent-Magnet Machines Using Conformal Mapping and Magnetic Equivalent Circuits", IEEE TRANSACTIONS ON ENERGY CONVERSION, IEEE SERVICE CENTER, PISCATAWAY, NJ, US, vol. 31, no. 2, 1 June 2016 (2016-06-01), pages 740 - 749, XP011610537, ISSN: 0885-8969, [retrieved on 20160518], DOI: 10.1109/TEC.2015.2507704**

EP 3 997 779 B1

**Description**

The present invention relates to a motor system.

A synchronous motor represents a motor in which the magnetic field of the rotor is constant, and the coils in the stator are energized so as to produce a rotating magnetic field, which is matched to the field of the rotor in frequency. A permanent magnet synchronous motor uses permanent magnets to produce the constant rotor field. A permanent magnet synchronous torque motor is optimized for high torque, at the expense of rotation speed, typically by increasing the diameter and the number of magnetic poles on the rotor.An example of a motor of the abovementioned type is known from US 2019/0140519A1. The known motor comprises a stator and a rotor. The stator comprises a plurality of electrical windings, and a cylindrical armature from which a plurality of teeth extend radially inward. Each of the windings is wound around at least one tooth. In some stators, each winding is wound only around a single tooth. Such type of winding is referred to as a non-overlapping winding. In other stators, a winding may span over multiple teeth. Such winding is referred to as an overlapping winding.

The rotor is arranged within the armature and is provided with a plurality of permanent magnets. Furthermore, a housing in the form of a cooling ring is arranged around the stator and defines a plurality of cooling channels through which a coolant may flow for the purpose of cooling the stator.

In the abovementioned motor, the cooling ring has open cooling channels that can be closed by shrink fitting a cover onto the cooling ring.

For some applications, such as industrial machining, it is important that the motor produces as much torque as possible within a given volume or space, and/or for a given mass of the motor. Either of these can be referred to as torque density. For these applications, it is therefore required to reduce the volume occupied by and/or mass of the motor without sacrificing maximum achievable torque. The Applicant has found that for some applications, the abovementioned requirement cannot be met sufficiently using the abovementioned known motor. It is therefore an object of the present invention to provide a permanent magnet synchronous torque motor that, compared to the known motor, allows a reduction in the space occupied by and/or mass of the motor while preventing or limiting a reduction of maximum achievable torque.

WO2013/118703A1 discloses a mechanically and electronically integrated module that is capable of improving cooling performance and suppressing an increase in pressure loss in the connection part between an inverter-side coolant channel, and a motor-side coolant channel or an external coolant flow, without necessitating an increase in the diameter of the device. A motor-side coolant channel and an inverter-side coolant channel are connected in a space configured from a frame, a stator core and an unloaded-side end frame, with a first channel conversion unit interposed between the channels on the outer-diameter side of a coil end on the unloaded side of a stator coil. The first channel conversion unit is provided with a channel for gradually changing the cross-sectional shape thereof, and changing from the cross-sectional shape of the opening of the inverter-side coolant channel to the cross-sectional shape of the opening of the motor-side coolant channel.

According to an aspect of the present invention, a motor system is provided according to claim 1 that is characterized in that the armature is made from non-grain-oriented steel, and in that a compressive stress inside the armature exceeds 100 MPa, and in that the electrical power supply is configured to provide electrical power and/or current to the plurality of windings such that the teeth and the armature are at least partially saturated.

Shrink-fitting results in a continuous compressive pressure between armature and cooling ring, reducing the thermal contact resistance and optimizing heat flow. The shrink-fitting has resulted in a residual stress in the armature that exceeds 100 MPa when measured under off conditions of the motor and normal ambient conditions of temperature, humidity, and pressure.

The process of shrink-fitting introduces compressive stress in the armature. In the art, such stress is considered detrimental as it reduces the magnetic performance of the armature material. More in particular, when comparing stressed and relaxed armature material, the magnetic polarization for the same applied magnetic field will be less for the stressed armature material. This is for example described in the paper entitled "Influence of Compressive Stress on Magnetic Properties of Laminated Electrical Steel Sheets" by Daisuke Miyagi et al, IEEE transactions on magnetics, vol. 46, No. 2, February 2010, pp. 318-321.

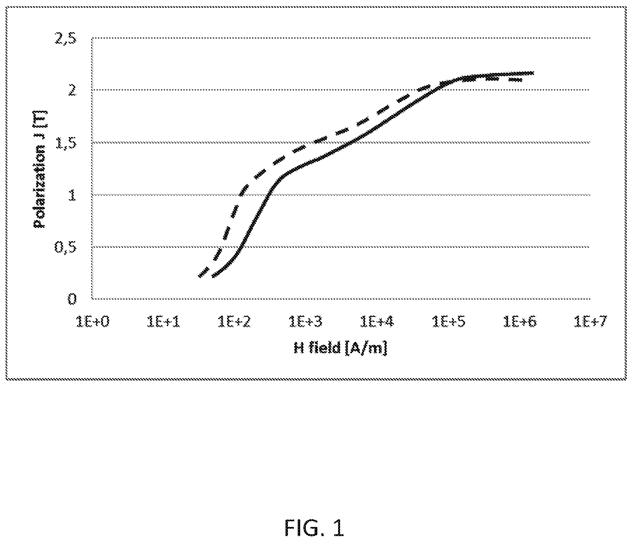

The Applicant has found that this apparent compressive stress related performance degradation will diminish when the material becomes saturated. More in particular, the Applicant has found that under conditions of moderate to strong saturation, the magnetic polarization may even be higher compared to the relaxed armature material. This behavior is illustrated in figure 1.

In figure 1, the unbroken line refers to non-grain-oriented steel under compressive stress of about 100 MPa. The slope of this line, which is equal to the magnetic permeability of the material, is lower than that of the dashed line, which refers to the same material without compressive stress. The lower slope indicates that at relatively low magnetic fields (H<1e3 A/m), the polarization is lower, resulting in less flux. However, at relatively high magnetic fields (H>1e5 A/m), the polarization for the compressed material exceeds that of the relaxed material. This means that at relatively high magnetic fields, the effective magnetic saturation of the compressed material is lower. The applicant therefore reaches a different conclusion than, e.g., Daisuke Miyagi et al. based on substantially similar data, by judging performance by the polarization itself rather than by the slope of the polarization curve. The reason for this difference is to be found in the requirements of the application, in which torque density is of paramount importance.

The Applicant has further realized that this effect can be used to achieve the abovementioned object of the invention. Typically, the armature has a given thickness that on one hand is not too small to prevent excessive saturation and on the other hand is not too large to keep the motor as compact as possible. By using the abovementioned effect, the armature thickness can be reduced as degradation in performance can be at least partially compensated by the stress related improvement in magnetic performance.

Preferably, degradation in polarization in each of the teeth and armature observed when changing a current level through the windings from a non-saturated state to an at least partially saturated state may be in a range between 8 and 40 percent when compared to the polarization that would have been achieved in the absence of saturation, and more preferably between 15 and 25 percent.

Preferably, each winding is a non-overlapping winding, because this further improves torque density. Additionally or alternatively, the windings can be divided into a plurality of winding groups, each winding group being configured to receive electrical power corresponding to a respective phase of a multi-phase electrical power source. Preferably, the windings are divided into three winding groups allowing the motor to be operated using three-phase electrical power.

A ratio between the number of teeth and the number of permanent magnets lies in a range from 0.75 and 1.5. Additionally, a ratio between a thickness of the armature and a width of the teeth lies in a range from 0.6 and 1.2. A desired ratio between the thickness of the armature and the width of the teeth, denoted by $b$, can be found using the ratio between the number of teeth and the number of magnets, denoted by $a$:

$$c_1 \cdot \left[\frac{1}{3} \cdot (-8a^2 + 18a - 7)\right] < b < c_2 \cdot \left[\frac{1}{3} \cdot (-8a^2 + 18a - 7)\right] \qquad \text{Eq. 1}$$

wherein $c_1$ and $c_2$ are constants to indicate a range relative to the most preferred solution, which is indicated in between the square brackets. According to the invention, $c_1$ is 0.85 and $c_2$ is 1.1.

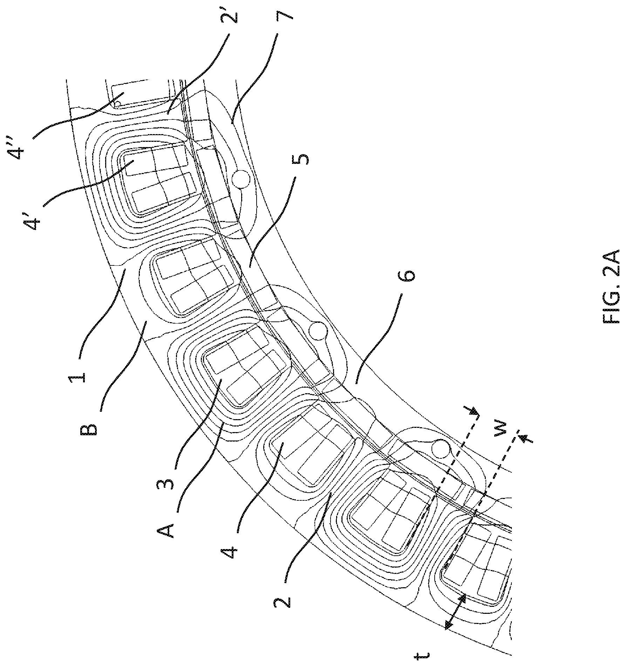

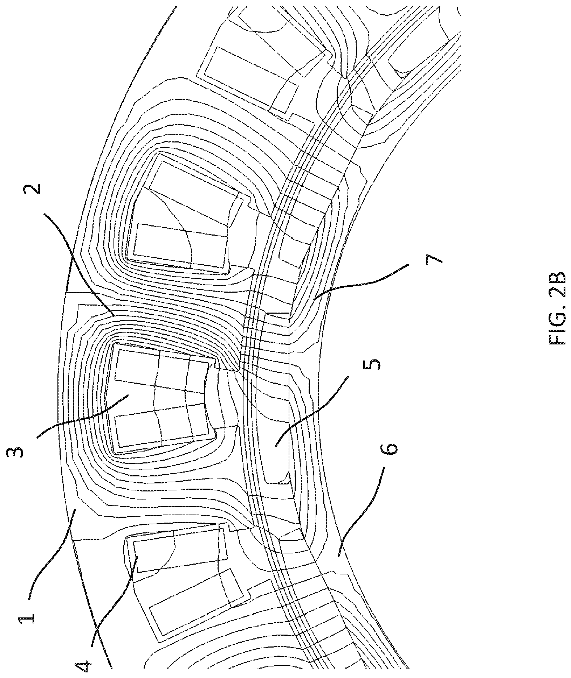

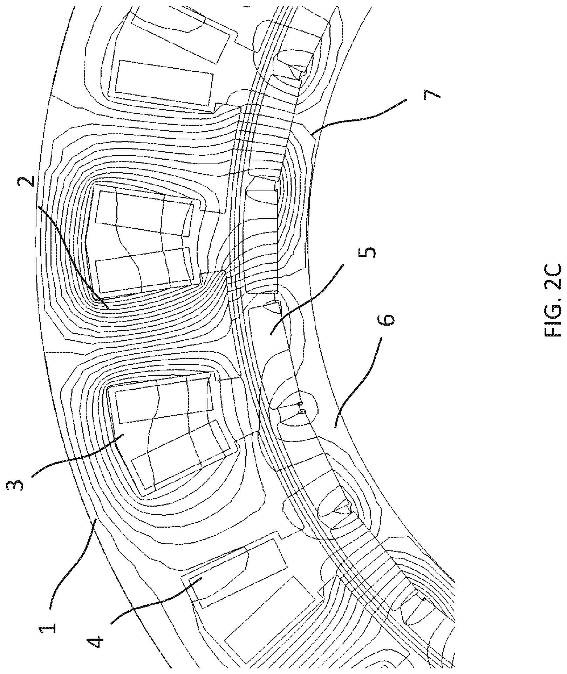

Figures 2A, 2B and 2C each show a cross section of a torque motor in a plane perpendicular to the motor axis. These figures differ in the teeth-to-magnet ratio, corresponding to factor $a$ in equation 1, that is used in the motor. In each figure, magnetic flux lines 7 are indicated. A high concentration thereof indicates a high magnetic flux density, which leads to partial saturation in the ferromagnetic material of the armature. Higher magnetic saturation implies more reluctance, which reduces the amount of magnetic flux that reaches the magnets, thereby reducing performance. As an engineering principle, an overall optimum of (in this case) torque density, is found when all limiting factors are substantially equal. In this case, the limiting factors are the magnetic saturation in various locations.

The Applicant has found that for motors having a ratio between the number of teeth and the number of permanent magnets close to unity, i.e. $a$ is approximately 1, it is preferable if the thickness of the armature is substantially equal to a width of the teeth, i.e. $b$ is approximately 1, wherein it is noted that all teeth have substantially the same width. This situation is illustrated in figure 2A.

Figure 2A illustrates a motor having a stator comprising an armature 1 from which teeth 2 extend radially inward. In between teeth 2, slots 3 are formed in which windings 4 are arranged. The winding for each tooth 2 is arranged in two adjacent slots 3. For example, the winding for tooth 2' comprises two parts 4', 4" that arranged in two adjacent slots 3.

In figure 2A, the stator, of which only a part is illustrated, comprises 18 teeth. The rotor comprises 20 permanent magnets 5 that are mounted on a cylinder or ring-shaped body 6. This situation corresponds to $a$=0.9 in equation 1. Furthermore, the thickness t of armature 1 is substantially equal to the width w of teeth 2. More in particularly, using $a$=0.9 in equation 1, a value of 0.9 can be found for factor b using equation 1.

As can be seen, the magnetic field lines 7, which are attributed to magnets 5 and windings 4, that pass through a tooth 2, pass through segments A of armature 1 to a much larger extent than through segments B of armature 1. In other words, magnetic flux is substantially shared between pairs of teeth 2; each pair shares a minimal amount of magnetic flux with the next pair. This means that the thickness of armature 1 has to be substantially identical to the width of teeth 2 as indicated by equation 1 and as shown in figure 2A. In this manner, teeth 2 and armature 1 will saturate substantially simultaneously thereby satisfying the above engineering principle.

Figures 2B and 2C illustrate motors having different ratios of the number of teeth and the number of magnets. In figure 2B, the ratio between the number of teeth 2 and the number of magnets 5 equals $a$ = 3/2, whereas in figure 2C $a$=3/4. This corresponds to a factor $b$ equaling 0.7 in both cases. In other words, the thickness of armature 1 is lower than the width of teeth 2.

In figures 2B and 2C, during operation, magnetic flux is shared not only between pairs of teeth 2, but between all teeth 2. This sharing implies that the magnetic flux exiting a tooth 2 and entering armature 1 flows both ways instead of just one. In turn, this implies that the amount of flux in armature 1 is lower than that in tooth 2. The engineering principle above still states that optimum performance is found when all limiting factors are substantially equal, meaning saturation in tooth 2 should be equal to saturation in armature 1, implying that flux density should be equal. A lower flux in armature 1 relative to tooth 2 implies that the armature thickness should be reduced proportionally relative to the situation shown in figure 2A. Therefore, in figures 2B and 2C, the thickness of armature 1 is made smaller than the width of teeth 2, in correspondence with equation 1 which states that b should be 0.7.

The number of teeth preferably lies within a range from 15 to 90, more preferably in a range from 24 to 48.

The cooling ring may comprise a base surface or plate that lies against the armature and cooling channel defining ridges that protrude radially outward from the surface or plate. The base surface or plate and the ridges are preferably integrally connected.

At least one ridge may comprise a recess for allowing coolant that moves in one of said cooling channels to move to an adjacent one of said channels. The cooling channels may be open channels. These channels can be transformed into closed channels by connecting a cover plate to the cooling ring. In this case, each channel among the plurality of channels is defined by the base surface or plate, the channel defining ridges, and the cover plate.

The teeth are preferably distributed uniformly in a circumferential direction along an inner wall of the armature. Additionally or alternatively, the teeth and the armature can be integrally connected. The armature can for example be laminated. For example, the teeth and armature can be formed using sheets of non-grain-oriented steel that are stacked in a direction parallel to the rotational axis, i.e. axial direction, of the motor.

The cooling ring may extend beyond the stator in an axial direction. A solidified molding compound or resin may be used to fill up this space.

Next, the invention will be described in more detail referring to the appended drawings, wherein:

Figure 1 illustrates the polarization as function of the magnetic field for non-grain-oriented steel;
Figures 2A-2C illustrate combinations of armature thickness and teeth width for different teeth-to-magnet ratios;
Figure 3 illustrates a perspective view of a motor in accordance with the present invention; and
Figure 4 illustrates a cross sectional view of the motor taken perpendicular to the axial direction of the motor.

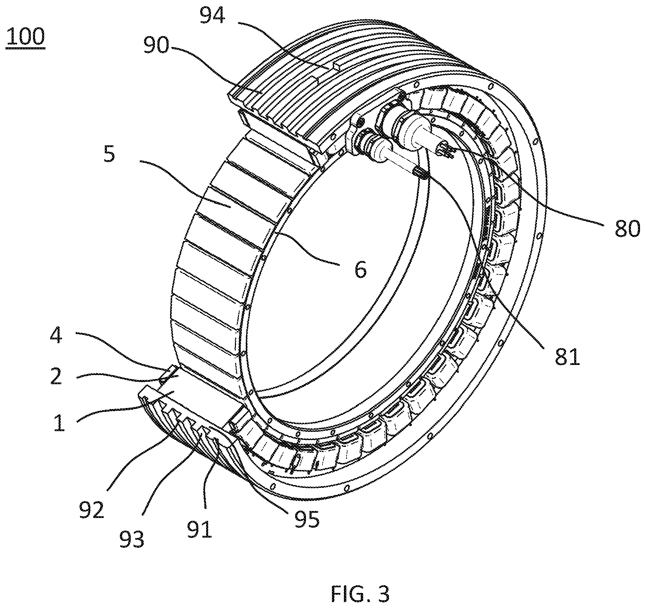

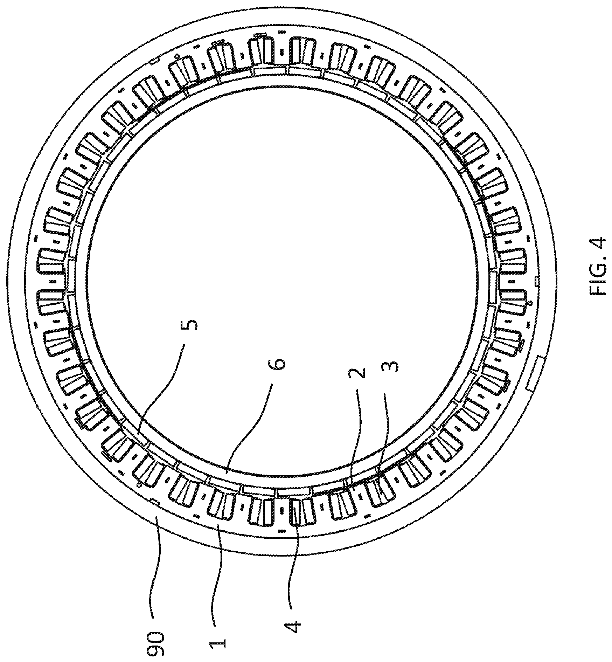

Figure 3 illustrates a perspective view of a motor 100 in accordance with the present invention and figure 4 illustrates a cross sectional view of this motor taken perpendicular to the axial direction of the motor.

The stator of motor 100 comprises a cylindrical armature made from non-grain-oriented steel from which teeth 2 extend radially inward towards the rotor. Teeth 2 and armature 1 are integrally connected. Each tooth 2 is provided with a respective non-overlapping winding 4.

The rotor comprises a cylindrical or ring-shaped body 6 made from ferromagnetic material such as non-grain-oriented steel or cobalt steel onto which permanent magnets 5, preferably of the Rare Earth type are mounted. Motor 100 comprises 38 permanent magnets 5 and 36 teeth 2. It should be noted that instead of permanent magnets 5, electromagnets fed by a DC power source could equally be used.

Motor 100 further comprise a cooling ring 90, made from a low density, high thermal conductivity metal, such as aluminum, that has been shrink-fitted around armature 1. Cooling ring 90 comprises a base surface 95 from which ridges 92 extend outwardly. The ridges define open cooling channels 93 through which a coolant may flow. Additionally, ridges 92 define a pair of grooves 91 in which an O-ring is received (not shown). A recess 94 may be provided in at least one ridge 92 for allowing coolant that flows in a channel 93 to move to an adjacent channel 93.

Prior to mounting cooling ring 90 around armature 1, the inner diameter of cooling ring 90 was smaller than the outer diameter of armature 1. Consequently, after shrink fitting cooling ring 90, which has a thickness in a radial direction that is at least 60 percent of the thickness of armature 1, a considerable amount of compressive stress will be present in armature 1, typically in the order of 100 MPa.

As shown, cooling ring 90 extends in the axial direction beyond the stator. This space may be filled with a solidified molding compound or resin to protect and fixate windings 4.

In figure 3, two connectors 80, 81 can be observed. Connector 80 is used for providing three-phase electrical power to windings 4. Connector 80 comprises four contacts, one for each phase and one for the common return path.

Connector 81 comprises contacts through which measurements signals from inside motor 100 can be obtained. For example, positional sensors may be provided inside motor 100 for the purpose of determining the relative position between stator and rotor. This position is valuable information for the electrical power supply (not shown) that drives the motor. More in particular, the current supplied to the various windings can be in dependence of the mutual position of rotor and stator. This information can also be used when ramping up the speed of the rotor. The electrical power supply may be configured to change the frequency of the supplied power or current signal.

A cover plate (not shown) may be connected to cooling ring 90 to transform the open channels 93 into closed channels. Such cover plate may be fixedly attached to cooling ring 90 by various known means. O-rings provided in grooves 91 ensure that the coolant remains in channels 93 defined by cooling ring 90.

Typically, cooling channels 93 extend in a spiraled manner around cooling ring 90. An inlet and outlet (not shown) may be provided through which a coolant, e.g., a liquid, can be fed to and extract from cooling ring 90, respectively.

In the above, the present invention has been explained using detailed embodiments thereof. It should be appreciated by the skilled person that various modifications can be made to these embodiments without departing from the scope of the invention that is defined by the appended claims.

## Claims

1. A motor system, comprising:

   a permanent magnet synchronous torque motor (100), comprising:

   a stator comprising a plurality of electrical windings (4), and a cylindrical armature (1) from which a plurality of teeth (2) extend radially inward, each of the windings being wound around at least one tooth;
   a rotor arranged within the armature and being provided with a plurality of permanent magnets (5); and
   a cooling ring (90) arranged around the stator and defining a plurality of cooling channels (93) through which a coolant may flow for the purpose of cooling the stator,

   wherein the cooling ring is shrink-fitted around the armature,
   wherein a ratio between the number of teeth and the number of permanent magnets lies in a range from 0.75 to 1.5, and wherein a ratio between a thickness of the armature, in a radial direction with respect to the armature, and a width of the teeth, in a circumferential direction with respect to the armature, lies in a range from 0.6 to 1.2, wherein ratio between the thickness of the armature and the width of the teeth, denoted by b, can be found using the ratio between the number of teeth and the number of permanent magnets, denoted by $a$, using:

   $$0.85 \cdot \left[\tfrac{1}{3} \cdot (-8a^2 + 18a - 7)\right] < b < 1.1 \cdot \left[\tfrac{1}{3} \cdot (-8a^2 + 18a - 7)\right]$$

   the motor system further comprising an electrical power supply for providing electrical power and/or current to the plurality of windings for the purpose of generating a rotating magnetic field,
   **characterized in that** the armature is made from non-grain-oriented steel, **and in that** a compressive stress inside the armature exceeds 100 MPa, **and in that** the electrical power supply is configured to provide electrical power and/or current to the plurality of windings such that the teeth and the armature are at least partially saturated.

2. The motor system according to claim 1, wherein the electrical power supply is configured to provide electrical power and/or current to the plurality of windings such that degradation in polarization in each of the teeth and armature observed when changing a current level through the windings from a non-saturated state to an at least partially saturated state may be in a range between 8 and 40 percent when compared to the polarization that would have been achieved in the absence of saturation, and more preferably between 15 and 25 percent.

3. The motor system according to claim 1 or 2, wherein each of the windings is a non-overlapping winding.

4. The motor system according to any of the previous claims, wherein the number of teeth is within a range from 15 to 90, more preferably in a range from 24 to 48.

5. The motor system according to any of the previous claims, wherein the cooling ring comprises a base surface or plate (95) that lies against the armature and cooling channel (93) defining ridges (92) that protrude radially outward from the surface or plate, wherein the base surface or plate and the ridges are preferably integrally connected.

6. The motor system according to claim 5, wherein at least one ridge comprises a recess (94) for allowing coolant that moves in one of said cooling channels to move to adjacent one of said channels.

7. The motor system according to claim 5 or 6, further comprising a cover plate that is connected to the cooling ring, wherein each channel among the plurality of channels is defined by the base surface or plate, the channel defining ridges, and the cover plate.

8. The motor system according to any of the previous claims, wherein the teeth are distributed uniformly in a circumferential direction along an inner wall of the armature.

9. The motor system according to any of the previous claims, wherein the teeth and the armature are integrally connected.

10. The motor system according to claim 9, wherein the armature is laminated.


**Patentansprüche**

1. Motorsystem, umfassend:
einen Permanentmagnet-Synchron-Drehmomentmotor (100), der Folgendes umfasst:

einen Stator, umfassend eine Vielzahl von elektrischen Wicklungen (4), und einen zylindrischen Anker (1), von dem eine Vielzahl von Zähnen (2) radial nach innen verlaufen, wobei jede Wicklung um mindestens einen Zahn gewickelt ist;
einen Rotor, der innerhalb des Ankers angeordnet ist und mit einer Vielzahl von Permanentmagneten (5) versehen ist; und
einen Kühlring (90), der um den Stator herum angeordnet ist und eine Vielzahl von Kühlkanälen (93) definiert, durch die ein Kühlmittel zum Kühlen des Stators fließen kann,
wobei der Kühlring um den Anker herum aufgeschrumpft ist,
wobei ein Verhältnis zwischen der Anzahl der Zähne und der Anzahl der Permanentmagnete in einem Bereich von 0,75 bis 1,5 liegt, und wobei ein Verhältnis zwischen einer Dicke des Ankers in radialer Richtung in Bezug auf den Anker und einer Breite der Zähne in Umfangsrichtung in Bezug auf den Anker in einem Bereich von 0,6 bis 1,2 liegt,
wobei das Verhältnis zwischen der Dicke des Ankers und der Breite der Zähne, bezeichnet mit b, mithilfe des Verhältnisses zwischen der Anzahl der Zähne und der Anzahl der Permanentmagnete, bezeichnet mit $a$, unter Verwendung von:

$$0{,}85 \cdot \left[\frac{1}{3} \cdot \left(-8a^2 + 18a - 7\right)\right] < b < 1{,}1 \cdot \left[\frac{1}{3} \cdot \left(-8a^2 + 18a - 7\right)\right]$$

dem Motorsystem, ferner umfassend eine elektrische Stromversorgung zum Bereitstellen elektrischer Leistung und/oder elektrischen Stroms für die Vielzahl von Wicklungen zum Erzeugen eines rotierenden Magnetfelds, **dadurch gekennzeichnet, dass** der Anker aus nicht kornorientiertem Stahl besteht, **und dadurch, dass** eine Druckspannung im Inneren des Ankers über 100 MPa liegt, **und dadurch, dass** die elektrische Stromversorgung so konfiguriert ist, dass sie die Vielzahl von Wicklungen mit elektrischer Leistung und/oder elektrischem Strom versorgt, sodass die Zähne und der Anker zumindest teilweise gesättigt sind.

2. Motorsystem nach Anspruch 1, wobei die elektrische Stromversorgung konfiguriert ist, um elektrische Leistung und/oder elektrischen Strom an die Vielzahl von Wicklungen bereitzustellen, sodass die Verschlechterung der Polarisation in jedem der Zähne und im Anker, die beim Ändern eines Strompegels durch die Wicklungen von einem nicht gesättigten Zustand in einen zumindest teilweise gesättigten Zustand beobachtet wird, in einem Bereich zwischen 8 und 40 Prozent liegen kann, verglichen mit der Polarisation, die ohne Sättigung erreicht worden wäre, und noch besser zwischen 15 und 25 Prozent.

3. Motorsystem nach Anspruch 1 oder 2, wobei jede der Wicklungen eine nicht überlappende Wicklung ist.

4. Motorsystem nach einem der vorstehenden Ansprüche, wobei die Anzahl der Zähne in einem Bereich von 15 bis 90, vorzugsweise in einem Bereich von 24 bis 48, liegt.

5. Motorsystem nach einem der vorstehenden Ansprüche, wobei der Kühlring eine Basisoberfläche oder -platte (95) umfasst, die am Anker anliegt, und einen Kühlkanal (93), der Rippen (92) bildet, die radial nach außen von der Oberfläche oder Platte vorstehen, wobei die Basisoberfläche oder -platte und die Rippen vorzugsweise einstückig miteinander verbunden sind.

6. Motorsystem nach Anspruch 5, wobei mindestens eine Rippe eine Aussparung (94) umfasst, die es Kühlmittel, das sich in einem der Kühlkanäle bewegt, ermöglicht, in den benachbarten Kanal zu fließen.

7. Motorsystem nach Anspruch 5 oder 6, ferner umfassend eine Abdeckplatte, die mit dem Kühlring verbunden ist, wobei jeder Kanal der Vielzahl von Kanälen durch die Basisoberfläche oder -platte, die kanaldefinierenden Rippen und die Abdeckplatte definiert ist.

8. Motorsystem nach einem der vorstehenden Ansprüche, wobei die Zähne gleichmäßig in Umfangsrichtung entlang einer Innenwand des Ankers verteilt sind.

9. Motorsystem nach einem der vorstehenden Ansprüche, wobei die Zähne und der Anker einstückig miteinander verbunden sind.

10. Motorsystem nach Anspruch 9, wobei der Anker laminiert ist.

## Revendications

1. Système de moteur, comprenant :
   un moteur à couple synchrone à aimants permanents (100), comprenant :

   un stator comprenant une pluralité d'enroulements électriques (4), et un induit cylindrique (1) à partir duquel une pluralité de dents (2) s'étendent radialement vers l'intérieur, chacun des enroulements étant enroulé autour d'au moins une dent ;
   un rotor agencé à l'intérieur de l'induit et pourvu d'une pluralité d'aimants permanents (5) ; et
   un anneau de refroidissement (90) agencé autour du stator et définissant une pluralité de canaux de refroidissement (93) à travers lesquels un liquide de refroidissement peut circuler afin de refroidir le stator,
   dans lequel l'anneau de refroidissement est fretté autour de l'induit,
   dans lequel un rapport entre le nombre de dents et le nombre d'aimants permanents est dans une plage allant de 0,75 à 1,5, et dans lequel un rapport entre une épaisseur de l'induit, dans un sens radial par rapport à l'induit, et une largeur des dents, dans un sens circonférentiel par rapport à l'induit, est dans une plage allant de 0,6 à 1,2, dans lequel le rapport entre l'épaisseur de l'induit et la largeur des dents, désigné par b, peut être trouvé en utilisant le rapport entre le nombre de dents et le nombre d'aimants permanents, désigné par $a$, utilisant :

   $$0.85 \cdot \left[\tfrac{1}{3} \cdot (-8a^2 + 18a - 7)\right] < b < 1.1 \cdot \left[\tfrac{1}{3} \cdot (-8a^2 + 18a - 7)\right]$$

   le système de moteur comprenant en outre une alimentation électrique pour fournir de l'énergie électrique et/ou du courant à la pluralité d'enroulements dans le but de générer un champ magnétique rotatif,
   **caractérisé en ce que** l'induit est fabriqué en acier à grains non orientés, **et en ce qu'**une contrainte de compression à l'intérieur de l'induit dépasse 100 MPa, **et en ce que** l'alimentation électrique est configurée pour fournir une puissance électrique et/ou un courant à la pluralité d'enroulements de telle sorte que les dents et l'induit soient au moins partiellement saturés.

2. Système de moteur selon la revendication 1, dans lequel l'alimentation électrique est configurée pour fournir une puissance électrique et/ou un courant à la pluralité d'enroulements de telle sorte que la dégradation de la polarisation dans chacune des dents et de l'induit observée lors du passage d'un niveau de courant à travers les enroulements d'un état non saturé à un état au moins partiellement saturé peut être comprise entre 8 et 40 pour cent par rapport à la polarisation qui aurait été obtenue en l'absence de saturation, et plus préférablement entre 15 et 25 pour cent.

3. Système de moteur selon la revendication 1 ou 2, dans lequel chacun des enroulements est un enroulement non chevauchant.

4. Système de moteur selon l'une quelconque des revendications précédentes, dans lequel le nombre de dents est dans une plage allant de 15 à 90, plus préférablement dans une plage allant de 24 à 48.

5. Système de moteur selon l'une quelconque des revendications précédentes, dans lequel l'anneau de refroidissement comprend une surface ou plaque de base (95) qui repose sur l'induit et un canal de refroidissement (93) définissant des crêtes (92) qui font saillie radialement vers l'extérieur de la surface ou plaque, dans lequel la surface ou plaque de base et les crêtes sont de préférence reliées de façon intégrale.

6. Système de moteur selon la revendication 5, dans lequel au moins une crête comprend un renfoncement (94) pour permettre au liquide de refroidissement qui se déplace dans l'un desdits canaux de refroidissement de se déplacer vers un canal adjacent desdits canaux.

7. Système de moteur selon la revendication 5 ou 6, comprenant en outre une plaque de recouvrement qui est reliée à l'anneau de refroidissement, dans lequel chaque canal parmi la pluralité de canaux est défini par la surface ou plaque de base, les crêtes définissant les canaux, et la plaque de recouvrement.

8. Système de moteur selon l'une quelconque des revendications précédentes, dans lequel les dents sont réparties uniformément dans une direction circonférentielle le long d'une paroi intérieure de l'induit.

9. Système de moteur selon l'une quelconque des revendications précédentes, dans lequel les dents et l'induit sont intégralement connectés.

10. Système de moteur selon la revendication 9, dans lequel l'induit est laminé.

EP 3 997 779 B1

FIG. 1

FIG. 2A

EP 3 997 779 B1

FIG. 2B

FIG. 2C

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190140519 A1

- WO 2013118703 A1

**Non-patent literature cited in the description**

- **DAISUKE MIYAGI et al.** Influence of Compressive Stress on Magnetic Properties of Laminated Electrical Steel Sheets. *IEEE transactions on magnetics*, February 2010, vol. 46 (2), 318-321